(19) Europäisches Patentamt
European Patent Office
Office européen des brevets

(11) **EP 2 242 129 B1**

## (12) FASCICULE DE BREVET EUROPEEN

(45) Date de publication et mention de la délivrance du brevet:
**25.12.2013 Bulletin 2013/52**

(51) Int Cl.:
***H01M 4/36*** *(2006.01)*     ***H01M 4/38*** *(2006.01)*
***H01M 4/134*** *(2010.01)*     *H01M 10/0525* *(2010.01)*

(21) Numéro de dépôt: **10159533.8**

(22) Date de dépôt: **09.04.2010**

(54) **Composition de matière active pour électrode négative d'accumulateur lithium-ion**

Aktives Material Zusammensetzung für negative Elektrode eines Lithium-Ionen-Akkus

Active material composition for the negative electrode of a lithium-ion accumulator.

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **10.04.2009 EP 09290266**

(43) Date de publication de la demande:
**20.10.2010 Bulletin 2010/42**

(73) Titulaires:
- **SAFT GROUPE SA**
  **93170 Bagnolet (FR)**
- **Centre National de la Recherche Scientifique**
  **75794 Paris Cedex 16 (FR)**
- **Université de Paris XII Val de Marne**
  **94010 Créteil Cedex (FR)**

(72) Inventeurs:
- **Hezeque, Thierry**
  **33240, Aubie Espessas (FR)**

- **Cuevas, Fermin**
  **91510, Lardy (FR)**
- **Latroche, Michel**
  **78210, Saint-Cyr-L'Ecole (FR)**
- **Caillon, Georges**
  **33520, BRUGES (FR)**
- **Jordy, Christian**
  **33440, Saint Louis de Montferrand (FR)**
- **Audry, Claudette**
  **33520, Bruges (FR)**

(74) Mandataire: **Hirsch & Associés**
**58, avenue Marceau**
**75008 Paris (FR)**

(56) Documents cités:
**US-A1- 2006 115 734    US-A1- 2007 148 544**

Remarques:
Le dossier contient des informations techniques présentées postérieurement au dépôt de la demande et ne figurant pas dans le présent fascicule.

**Description**

DOMAINE TECHNIQUE

Le domaine technique auquel se rapporte l'invention est celui des alliages métalliques à base de silicium et d'étain utilisés comme matériaux d'électrode négative (anode) d'accumulateur lithium-ion. L'invention se rapporte aussi au domaine technique des procédés de fabrication d'alliages métalliques à base de silicium et d'étain.

ETAT DE LA TECHNIQUE

Le graphite est connu comme matériau d'électrode négative d'accumulateur lithium-ion. Ce matériau présente une capacité électrochimique théorique de 370 mAh/g et pratique d'environ 340 mAh/g, ce qui peut être largement amélioré en utilisant de nouveaux matériaux.

Les matériaux à base d'étain et de silicium présentent une capacité théorique de stockage électrochimique respectivement 2,5 et 10 fois plus élevée que le graphite. Cependant, ils présentent une durée de vie très faible en raison de la forte variation volumique qui a lieu au cours des cycles de lithiation / délithiation du matériau.

Les matériaux composites à base de graphite et de silicium présentent une durée de vie améliorée par rapport au silicium pur (> 100 cycles) mais ceux-ci ne contiennent généralement que 10% de silicium ; au-delà de 10% de silicium, la perte de capacité en cyclage devient très importante. De ce fait, la capacité de l'électrode négative avec une durée de vie acceptable est de l'ordre de 750 mAh/g et une capacité volumique de 1240 mAh/cm$^3$ (capacité exprimée à l'état chargé).

Les solutions que l'on peut identifier dans la littérature proposent essentiellement de résoudre le problème de la perte de contact électrique lié au gonflement du matériau au cours du cyclage. Dans cet objectif, l'art antérieur concerne la réalisation de matériaux composites silicium / carbone (graphite, noir de carbone, nanotubes), silicium / métal, couche mince, utilisation de liant à fort pouvoir adhésif (CarboxyMéthylCellulose (CMC), acide polyacrylique ou dérivés, polyimide). Le document FR-A-2 885 734 décrit un procédé de fabrication d'un matériau composite de silicium et de carbone.

Par ailleurs, le silicium et l'étain sont deux éléments formant des alliages avec le lithium qui ont des propriétés complémentaires : le silicium très peu conducteur coalesce peu alors que l'étain très conducteur a tendance à coalescer durant le fonctionnement électrochimique. La combinaison de ces deux éléments dans un alliage à base de lithium est donc attractive.

Néanmoins, la synthèse d'un alliage contenant du silicium et de l'étain est compliquée en raison du caractère malléable de l'étain qui a alors tendance à créer des agglomérats de grande taille. Le matériau ainsi obtenu est difficilement mis en oeuvre comme matériau actif d'électrode en raison de sa forte granulométrie (>35$\mu$m) et les résultats électrochimiques sont peu probants.

Le document US2007/0148544 décrit un procédé de fabrication d'un alliage à base de silicium et d'étain. Ce document décrit aux exemples 15 et 16 l'étape de préparation d'un mélange d'une poudre de silicium, d'une poudre d'étain et d'une poudre de cobalt ou de nickel, suivie de la synthèse de l'alliage par mécanosynthèse. D'une part, l'alliage est obtenu en une seule étape de mécanosynthèse. D'autre part, l'étape de mécanosynthèse est effectuée en l'absence de poudre de carbone. L'alliage obtenu dans ces deux exemples comprend une phase amorphe de silicium et une phase amorphe d'étain.

Le document US2006/0115734 décrit une matière active pour électrode négative d' accumulateur de type lithium-ion, comprenant de l'étain, du cobalt, du carbone et du silicium obtenu par mécanosynthèse. Cette matière active comprend une phase nanocristalline inférieure à 10 nm contenant du cobalt et de l'étain.

Le document JP2005-158305 décrit un procédé de fabrication d'un alliage à base de silicium et d'étain.

Ce document décrit à l'exemple 38 l'étape de mélange de silicium, d'étain, d'argent et de fer sous forme de poudres. L'alliage est obtenu par mécanosynthèse. Le déroulement de la mécanosynthèse est interrompu à mi-chemin pour permettre l'incorporation d'une poudre d'un matériau carboné. Le composé obtenu présente une capacité électrochimique de 910 mAh/g. Celle-ci chute après cinq cycles à 567 mAh/g. La durée de vie en cyclage de cet exemple n'est donc pas satisfaisante. Par ailleurs, comme expliqué ci-avant, la synthèse d'un alliage en partant d'un mélange de poudres contenant à la fois du silicium et de l'étain est compliquée en raison du caractère malléable de l'étain qui a alors tendance à créer des agglomérats de grande taille.

On recherche donc un matériau d'électrode négative d'accumulateur lithium-ion présentant une capacité électrochimique massique supérieure à 1000 mAh/g, une capacité volumique à l'état chargé d'au moins 1800 mAh/cm$^3$, ainsi qu'une durée de vie en cyclage élevée. Une durée de vie en cyclage élevée signifie que l'accumulateur peut être soumis à au moins 180 cycles, de préférence à au moins 200 cycles sans que sa capacité ne chute de plus de 20% par rapport à sa capacité initiale.

On recherche également un procédé permettant de fabriquer un alliage à base d'étain et de silicium qui puisse être facilement utilisé comme matériau d'électrode négative, c' est-à-dire avec une granulométrie suffisamment fine pour être mise en oeuvre comme matière active d'une électrode négative d'un accumulateur au lithium. On cherche également un procédé permettant de réduire la décomposition d'un pré-alliage à base d'étain.

RESUME DE L'INVENTION

Un métal inerte étant défini comme un métal ne formant pas de composés lithiés ayant une quantité de lithium significative, c'est-à-dire supérieure à 0,05Li/M, au potentiel de formation des composés SiLix (potentiel supérieur à 50 mV par rapport au couple Li$^+$/Li$\underline{o}$).
L'invention a pour objet un alliage comprenant étain et silicium comprenant :

a) une phase nanocristalline contenant au moins 50% atomique de l'élément silicium Si° ;
b) une phase nanocristalline contenant un composé à base d'étain ;
c) une phase nanocristalline constituée de l'élément étain Sn°.

Selon un mode de réalisation, la phase nanocristalline a) et/ou des particules contenant du silicium sont recouvertes au moins partiellement par la phase nanocristalline b) et/ou la phase nanocristalline c).
Selon un mode de réalisation, la phase nanocristalline a) et/ou au moins une particule contenant du silicium sont recouvertes au moins partiellement par une phase nanocristalline riche en étain, une phase riche en étain étant présente si, sur au moins un profil de concentration mesuré au microscope électronique à transmission, l'alliage présente un pic de concentration tel que
le ratio Sn$_{max}$/ Max(Sn$_1$, Sn$_2$) est supérieur à 1,1, de préférence supérieur à 1,3 ;
où
Sn$_{max}$ désigne la concentration massique au maximum du pic de concentration de l'étain ;
Sn$_1$ et Sn$_2$ désignent les concentrations massiques d'étain aux deux bases du pic ; et
Max(Sn$_1$, Sn$_2$) représente la valeur maximum de Sn$_1$ et de Sn$_2$ ;
le profil de concentration ayant pour origine un point éloigné d'une distance comprise entre 20 et 100 nm du centre des particules contenant du silicium ;
le centre des particules contenant du silicium étant défini comme le point correspondant au centre des zones de concentration les plus élevées en silicium mesurées par imagerie par microscopie électronique à transmission (MET).
Selon un mode de réalisation, la quantité d'étain Sn° dans la phase nanocristalline c) représente jusqu'à 50%, de préférence de 5 à 50%, de préférence de 10 à 40% de la quantité totale d'étain présente dans l'alliage.
Selon un mode de réalisation, la quantité d'étain Sn° dans la phase nanocristalline c) représente moins de 5%, de préférence moins de 3% de la quantité totale d'étain présente dans l'alliage.
Selon un mode de réalisation, l'alliage a pour formule Si$_a$Sn$_b$C$_c$M$_m$ où
M représente au moins un métal inerte, Al ou un mélange de ceux-ci ;

$$0,20 \leq a \leq 0,80 \ ;$$

$$0,05 \leq b \leq 0,40 \ ;$$

$$0,05 \leq c \leq 0,50 \ ;$$

$$0,01 \leq m \leq 0,30 \ ;$$

$$a + b > 0,45 \ ;$$

$$a+b+c+m = 1.$$

Selon un mode de réalisation, le pourcentage massique de la quantité de phase contenant au moins 95% de silicium dans la phase a) est supérieur à 30%, de préférence supérieur à 40% du pourcentage massique total de silicium contenu dans l'alliage.

Selon un mode de réalisation, l'alliage ne comprend pas de phase SiC.

Selon un mode de réalisation, l'alliage ne comprend pas de carbone cristallin.

Selon un mode de réalisation, l'alliage comprend l'élément Al présent en une fraction atomique inférieure à 0,05, de préférence de 0,02 à 0,03 par rapport à l'alliage.

Selon un mode de réalisation, la taille des particules contenant du silicium est de 20 à 200 nm, de préférence de 20 à 100 nm, de préférence de 20 à 50 nm.

L'invention a également pour objet une électrode comprenant un alliage selon l'invention.

L'invention a également pour objet un accumulateur lithium-ion comprenant au moins une électrode négative qui est une électrode selon l'invention.

Enfin, l'invention a pour objet un procédé de fabrication d'un alliage comprenant du silicium et de l'étain comprenant les étapes de :

a) préparation d'un préalliage à partir d'étain et d'au moins un métal inerte, ou d'aluminium ou d'un mélange de ceux-ci ;

b) ajout de carbone, de silicium et éventuellement de métal inerte au préalliage de l'étape a) ;

c) synthèse de l'alliage.

Ce procédé résout le problème de la décomposition totale du préalliage en étain $Sn^{\underline{o}}$ et permet d'obtenir une poudre d'un alliage à base d'étain et de silicium présentant une granulométrie suffisamment fine pour être mise en oeuvre comme matière active d'une électrode négative d'un accumulateur lithium-ion.

Selon un mode de réalisation, la surface spécifique du carbone est comprise entre 20 et 500 $m^2/g$, de préférence entre 20 et 100 $m^2/g$.

## BREVE DESCRIPTION DES FIGURES

Figure 1 : Analyse par la méthode Rietveld du composé $Ni_{3,4}Sn_4$. Le diffractogramme est affiné avec une phase majoritaire (99,5 % en masse) $Ni_{3,4}Sn_4$.

Figure 2 : Evolution des diffractogrammes par diffraction des rayons X (DRX) en fonction du temps de broyage. Les phases $Ni_{3,4}Sn_4$, $Sn°$ et $Si°$ sont identifiées.

Figure 3 : Analyse Rietveld du composé $Si_{0,32}Sn_{0,18}C_{0,32}Ni_{0,14}Al_{0,04}$ après 20h de broyage. Le diagramme est affiné avec trois phases : $Ni_{3,4}Sn_4$, Si et Sn.

Figure 4 : Cartographies des concentrations des éléments Si, Sn, Ni, Al et C dans l'alliage mesurées au MET par analyse EDX.

Figure 5a : Cartographie de la concentration d'étain dans l'alliage mesurée au MET par analyse EDX.

Figure 5b : profil de concentration massique de Si, Sn, Ni et C mesuré sur la ligne définie sur la Figure 5a. $Sn_{max}$ désigne la concentration au sommet du pic de concentration et $Sn_1$ et $Sn_2$ les concentrations de Sn aux deux bases du pic. Le segment AB désigne la ligne sur laquelle le profil de concentration est mesuré.

Figure 6 : Evolution du potentiel de l'électrode à base d'alliage $Si_{0,32}Sn_{0,18}C_{0,32}Ni_{0,14}Al_{0,04}$ en fonction de la capacité chargée pour les premiers cycles de charge/décharge. Mesure de la capacité réversible du composé $Si_{0,32}Sn_{0,18}C_{0,32}Ni_{0,14}Al_{0,04}$.

Figure 7 : Evolution de la capacité réversible de l'alliage $Si_{0,32}Sn_{0,18}C_{0,32}Ni_{0,14}Al_{0,04}$ (Exemple 1) en fonction du nombre de cycles charge/décharge.

Figure 8 : Evolution de la capacité réversible de l'alliage $Si_{0,37}Sn_{0,14}C_{0,30}Ni_{0,02}Al_{0,17}$ (Exemple 2) en fonction du nombre de cycles charge/décharge.

Figure 9 : Evolution de la capacité réversible de l'alliage $Si_{0,33}Sn_{0,12}C_{0,40}Al_{0,03}Fe_{0,12}$ (Exemple 3) en fonction du nombre de cycles charge/décharge.

Figure 10 : Evolution de la capacité réversible de l'alliage $Si_{0,32}Sn_{0,18}C_{0,32}Ni_{0,14}Al_{0,04}$ (Exemple 5 (comparatif)) en fonction du nombre de cycles charge/décharge.

## EXPOSE DETAILLE DE MODES DE REALISATION DE L'INVENTION

Le procédé de fabrication selon l'invention permet de fabriquer un alliage à base de silicium et d'étain en résolvant le problème de la tendance de l'étain à créer des agglomérats de grande taille, qui ne peuvent pas être ensuite utilisés dans la fabrication d'une matière active d'électrode négative d'accumulateur au lithium. Un alliage peut être défini comme un produit métallique obtenu en incorporant à un métal un ou plusieurs éléments. Les éléments d'un alliage réagissent ensemble pour former un système constitué de plusieurs phases.

Afin de résoudre ce problème, on prépare dans une première étape un préalliage comprenant de l'étain et au moins un métal inerte ou Al ou un mélange de ceux-ci. Un métal inerte étant défini comme un métal ne formant pas de composés lithiés ayant une quantité de lithium significative, c'est-à-dire supérieure à 0,05Li/M, au potentiel de formation des composés SiLix (potentiel supérieur à 50 mV par rapport au couple Li$^+$/Li°).

De préférence, le métal inerte est choisi dans le groupe comprenant Ni, Fe, Cu, Co, Mn, Ti, Zr, Y, Zn, Mo, Nb, V, W, Ag, Au, In, Mg, Pd, Pt, les terres-rares, les lanthanides, ou un mélange de ceux-ci.

On mélange de l'étain avec le ou les métaux inertes ou Al ou un mélange de ceux-ci. De préférence, l'étain et les métaux inertes et/ou Al sont sous forme de poudre. Le préalliage peut être obtenu par voie thermique ou par mécanosynthèse, par exemple par broyage du mélange de poudres dans un broyeur à billes (ball milling). Dans un mode préféré de réalisation, le métal inerte est le nickel. La fabrication du préalliage permet de limiter l'agglomération de l'étain.

De préférence, le préalliage a pour formule Ni$_{3+x}$Sn$_4$ avec x compris entre 0,2 et 0,6 ; de préférence entre 0,3 et 0,5. On peut par exemple fabriquer un préalliage de formule Ni$_{3,4}$Sn$_4$ par métallurgie des poudres du nickel (Cerac 99,9%, granulométrie < 45 $\mu$m) et de l'étain (Alfa-Aesar 99,8%, granulométrie <45 $\mu$m). Les poudres de nickel et d'étain sont pressées sous forme de pastilles qui sont ensuite placées dans une ampoule en silice scellée sous argon et recuites pendant environ une semaine à environ 700°C. D'autres pré-alliages peuvent être envisagés, tels que Cu$_6$Sn$_5$ et Fe$_{50}$Sn$_{50}$.

Dans une seconde étape, on fabrique, par exemple par mécanosynthèse, l'alliage définitif en ajoutant les éléments chimiques restants constitutifs de l'alliage, dont le silicium, avec du carbone à l'état finement divisé. Le silicium utilisé peut avoir une taille granulométrique inférieure ou égale à environ 1 $\mu$m.

Dans un mode particulier de réalisation, le carbone utilisé a une surface spécifique BET comprise entre 20 et 500 m$^2$/g, de préférence entre 20 et 50 m$^2$/g. En deçà de 2 0 m$^2$/g, il n'y a pas suffisamment d'interfaces carbone/poudre métallique pour éviter l'agglomération des particules. Au-delà de 500 m$^2$/g, la capacité irréversible de l'alliage est trop importante. Le carbone peut par exemple être sous forme de noir de carbone. Le graphite ordinaire tel que celui utilisé dans les électrodes négatives d'un accumulateur lithium-ion conventionnel et les fibres de carbone ne sont pas suffisants pour le procédé selon l'invention en raison de leur surface spécifique trop faible ou de leur facteur de forme inadapté. En l'absence de carbone à l'état finement divisé, l'alliage obtenu se présente sous forme de billes de plusieurs millimètres de diamètre qu'il est extrêmement difficile à réduire sous forme d'une poudre fine. L'analyse par diffraction des rayons X (DRX) et l'estimation de la quantité de chaque phase par affinement par la méthode de Rietveld montre qu'en l'absence de carbone à l'état divisé, le préalliage à base d'étain s'est totalement décomposé en formant de l'étain nanocristallin. Les analyses par microscopie électronique par transmission (MET) confirment la présence d'étain quasi pur. L'étain pur coalesce et adhère aux parois du récipient utilisé pour la mécanosynthèse. L'ajout de carbone finement divisé joue le rôle de lubrifiant et d'antiagglomérant pendant l'étape de préparation de l'alliage définitif. Il a pour effet de réduire la décomposition du pré-alliage en étain pur. Il permet donc de limiter la formation d'étain pur issu de la décomposition du pré-alliage d'étain, qui entraîne une agglomération importante des particules. En présence de carbone finement divisé, la phase M-Sn utilisée comme précurseur se décompose légèrement. On peut observer par rayons X et microscopie électronique à balayage à transmission, une très fine couche d'étain Sn° autour des nanocristallites de Silicium. La Demanderesse pense que ce type de nanostructure est bénéfique pour les performances en cyclage car l'étain permet d'accommoder l'interface entre le silicium, dont la surface va augmenter de 150% en charge, et les autres phases potentiellement inertes et dont la surface ne devraient pas ou peu varier. Ce type de nanostructure se révèle plus stable mécaniquement en cycles de gonflement/dégonflement de la matière active.

A l'issu de cette deuxième étape de synthèse de l'alliage, on obtient l'alliage définitif contenant les phases suivantes :

- une phase nanocristalline constituée du pré-alliage,
- une phase nanocristalline constituée d'élément silicium contenant au moins 50% atomique. On observe aussi par MET la présence de particules d'un composé contenant du silicium et du nickel.

Dans un mode de réalisation particulier, la quantité de silicium dans la phase nanocristalline constituée de l'élément silicium est supérieure à 50% atomique de la quantité totale de silicium contenu dans l'alliage.

Dans un mode de réalisation, les phases contenant de l'étain sont nanocristallines, c'est-à-dire que la taille des cristallites est inférieure à 100 nm, de préférence inférieure à 50 nm.

Dans un mode de réalisation, l'alliage ne comprend pas de phase SiC mesurable par diffraction des rayons X (DRX).

Dans un mode de réalisation, l'alliage ne comprend pas de carbone sous forme cristalline.

Le procédé selon l'invention peut être avantageusement utilisé pour fabriquer un alliage de formule Si$_a$Sn$_b$C$_c$M$_m$ où M représente au moins un métal inerte ou Al ou un mélange de ceux-ci; et dans laquelle :

$0,20 \leq a \leq 0,80$ ; de préférence $0,20 \leq a \leq 0,50$, de préférence encore $0,30 \leq a \leq 0,50$. Le silicium est le principal élément à l'origine des capacités massiques élevées ; trop peu de silicium mène à une capacité faible et trop de silicium mène à une durée de vie faible par perte de contacts électriques liés au gonflement et au caractère semi-conducteur du Silicium.

$0,05 \leq b \leq 0,40$ ; de préférence $0,10 \leq b \leq 0,30$, de préférence encore $0,15 \leq b \leq 0,25$. L'étain participe à la capacité. Il présente également l'avantage d'être très conducteur et ductile ce qui aide à maintenir les contacts électriques lors du gonflement et dégonflement. Néanmoins, l'étain pur a tendance à coalescer ce qui pose également des problèmes de durée de vie.

$0,05 \leq c \leq 0,50$ ; de préférence $0,10 \leq c \leq 0,40$, de préférence encore $0,10 \leq c \leq 0,25$. Le carbone sert de lubrifiant, d'antiagglomérant et minimise la réaction entre le silicium et la phase M-Sn. Il permet d'obtenir des poudres fines que l'on peut mettre en oeuvre facilement, et d'autre part, il aide à former une phase riche en étain autour de particules contenant du silicium. La présence de la phase riche en étain permet d'accommoder plus facilement les variations de volume du silicium au cours des cycles de charge et décharge de l'accumulateur. La quantité d'étain Sn° pure étant suffisamment réduite par le procédé selon l'invention pour que les phénomènes de coalescence ne se produisent pas.

$0,01 \leq m \leq 0,30$ ; de préférence $0,05 \leq m \leq 0,25$, de préférence encore $0,10 \leq m \leq 0,25$. Le métal inerte sert d'une part à limiter l'expansion volumique globale de l'alliage et d'autre part à assurer une bonne conduction électronique à l'intérieur des particules d'alliages. Néanmoins, une quantité trop importante pénalise la capacité.

L'addition d'aluminium dans l'alliage permet d'améliorer les propriétés en cyclage. Il participe également à la capacité (à hauteur de 1Li/atome à comparer à 4,4Li pour Si et Sn et 0,17Li pour le graphite). De préférence, la fraction atomique d'aluminium est inférieure à 0,05, de préférence de 0,02 à 0,03 par rapport à l'alliage. Au-delà de 0,05, la capacité et la durée de vie de l'alliage sont réduites.

$a + b > 0,45$. Cette condition permet d'avoir suffisamment de Si et de Sn pour assurer une capacité élevée.

L'alliage selon l'invention possède une capacité électrochimique élevée, d'au moins 800 mAh/g, ainsi qu'une durée de vie élevée en cyclage. Il peut donc être utilisé de manière avantageuse comme matière électrochimiquement active d'une électrode négative d'un accumulateur au lithium.

EXEMPLES

Le composé $Si_{0,32}Sn_{0,18}C_{0,32}Ni_{0,14}Al_{0,04}$ a été élaboré par mécanosynthèse à partir de poudre d'aluminium, de silicium et d'un pré-alliage de formule $Ni_{3,4}Sn_4$. 32% atomique de carbone, par exemple sous forme de noir de carbone, ont été ajoutés comme agent lubrifiant pendant le broyage. L'aluminium utilisé (Aldrich, pureté : 99%) a une taille de particules inférieure à 75 $\mu$m et le silicium, une taille de particules inférieure à 1 $\mu$m.

Le mélange des poudres de Si, Al, $Ni_{3,4}Sn_4$ et de carbone a été introduit dans une jarre de broyage contenant des billes (diamètre = 7 mm) en acier pour effectuer le broyage mécanique sous atmosphère inerte (argon). La masse totale de la poudre de départ hors carbone est de 6 g. Le rapport des masses billes/poudre est égal à 5. Le broyage est réalisé dans un broyeur planétaire (Fritsch P7) avec une vitesse de rotation du plateau de 600 tpm. Des prélèvements de poudre ont été effectués à différents stades du broyage (temps de broyage égal à 1h, 5h, 10h et 20h) pour réaliser des analyses par diffraction des rayons X (DRX). A chaque prélèvement, toute la poudre est mécaniquement décollée des parois de la jarre pour obtenir un échantillon représentatif de l'ensemble de la poudre. A la fin du broyage (20h), les échantillons ont été analysés par DRX et par microscopie électronique à transmission (MET).

Afin d'obtenir des échantillons MET suffisamment minces, le produit de broyage est mélangé à de la poudre de cuivre, laminé dans une feuille en acier et aminci par abrasion ionique. Les observations MET ont été faites sur un microscope électronique Tecnai G2 F20 opérant a une tension d'accélération de 200 kV à la fois en mode microscopie électronique à transmission (TEM) pour les images et en mode microscopie électronique en transmission à balayage (STEM) couplée à l'analyse chimique (EDX) pour l'acquisition des cartographies et des lignes de profils élémentaires. La microscopie électronique par transmission offre une résolution de l'ordre du nanomètre cube.

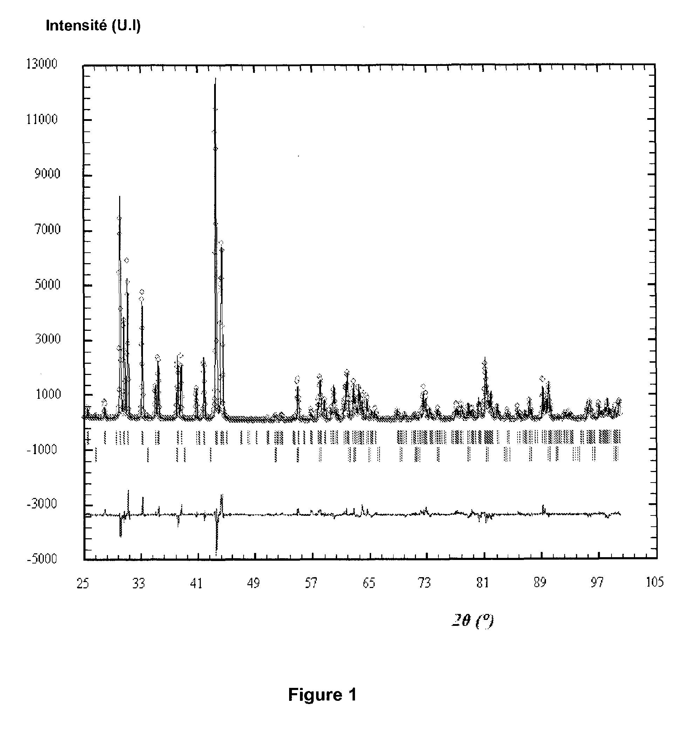

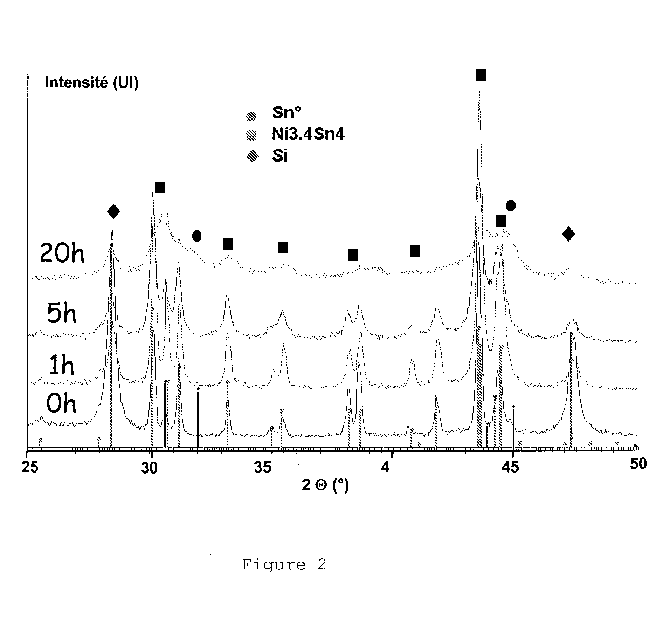

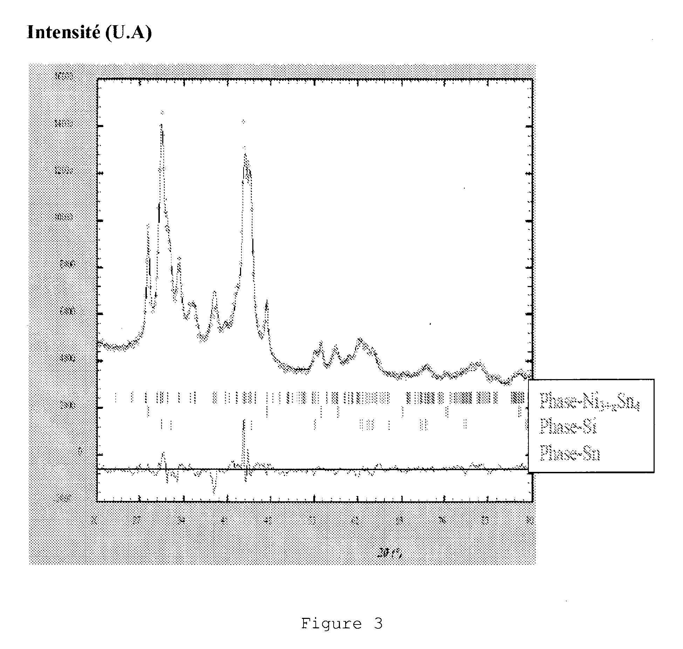

Le diffractogramme DRX du pré-alliage $Ni_{3,4}Sn_4$ est représenté à la Figure 1. L'évolution des diffractogrammes DRX des phases $Ni_{3,4}Sn_4$, Sn° et silicium dans le composé $Si_{0,32}Sn_{0,18}C_{0,32}Ni_{0,14}Al_{0,04}$ en fonction du temps de broyage est montrée à la Figure 2. Le diffractogramme DRX des phases $Ni_{3,4}Sn_4$, étain et silicium dans le composé $Si_{0,32}Sn_{0,18}C_{0,32}Ni_{0,14}Al_{0,04}$ après 20h de broyage est montrée à la Figure 3. Au cours du broyage mécanique, on assiste à la disparition des raies de diffraction de l'aluminium et à l'élargissement des pics correspondants aux phases Si et $Ni_{3,4}Sn_4$. Le diffractogramme de l'échantillon après 20 heures de broyage peut s'indexer correctement avec trois phases : une phase cristalline avec la structure du silicium (groupe d'espace F d-3 m), une phase cristalline de structure type $Ni_{3,4}Sn_4$ (groupe d'espace C 2/m) et une phase cristalline minoritaire de type Sn (groupe d'espace I $4_1$/a m d). L'analyse Rietveld de l'échantillon après 20 heures de broyage permet d'évaluer les teneurs massiques des phases type $Ni_{3,4}Sn_4$, Si et Sn° à respectivement 72 % en masse, 23 % en masse et 5 % en masse. Les tailles de cristallite sont proches de 10 nm pour toutes les phases.

Tableau 1 : comparaison des paramètres de maille des phases affinées par la méthode Rietveld de l'alliage $Si_{0,32}Sn_{0,18}C_{0,32}Ni_{0,14}Al_{0,04}$ avec ceux de Si et de Sn°.

| Phase | G. Espace | Par. maille (Å) (affinement) | Par. maille (Å) (éléments purs) | Taille cristallite (nm) | Teneur (mass.%) |
|---|---|---|---|---|---|
| $Ni_{3,4}Sn_4$ | C 2/m | $a$ = 12,37(1) $b$ = 4,057(1) $c$ = 5,194(1) $\beta$ = 104,6(1)° | | 7 | 72 |
| Si | F d-3 m | $a$ = 5,434(3) | $a$ = 5,431 | 13 | 23 |
| Sn | $I 4_1/a m d$ | $a$ = 5,855(1) $c$ = 3,184(1) | $a$ = 5,830 c = 3,186 | 10 | 5 |

L'ajout de carbone permet de garder presque dans son intégralité la phase de départ $Ni_{3,4}Sn_4$ lors du broyage mécanique. Toutefois, pour des temps longs du broyage (tB = 20h), la phase type Sn° commence à apparaître (5 mass. %) ce qui peut indiquer un début de décomposition de la phase de type $Ni_{3,4}Sn_4$.

La microstructure du matériau après 20 heures de broyage a été analysée par MET. L'acquisition d'images en mode microscopie électronique en transmission à balayage (STEM) et des cartographies analytiques par microscopie électronique à balayage couplée à l'analyse chimique (EDX) montrent la formation d'une microstructure bimodale. Cette microstructure est formée par du Si pur entouré d'une deuxième composante plus fine et multi-élémentaire. Les particules contenant du silicium ont une taille d'environ 100 nm.

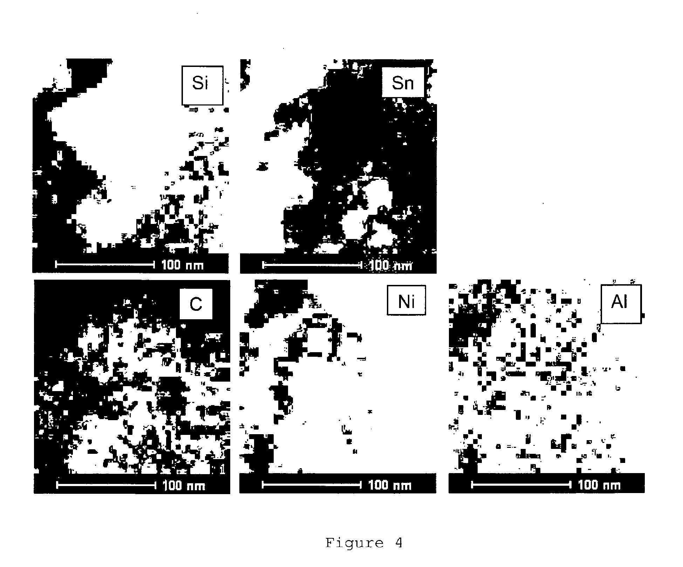

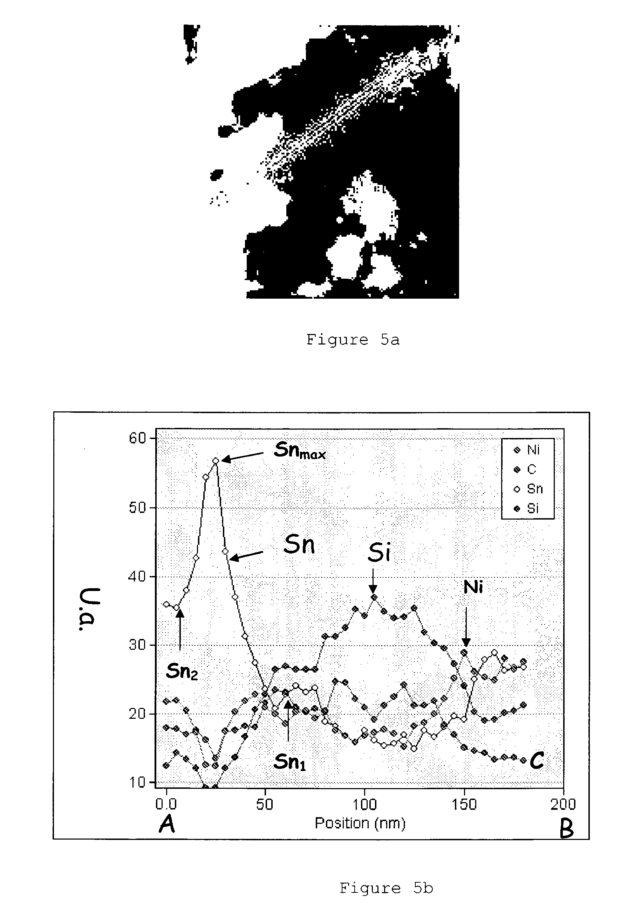

La composition de la phase multi-élémentaire n'est pas homogène. En effet, sur les cartographies EDX (Figure 4), on peut noter, par exemple, que le renforcement du signal de Sn n'est pas suivi par celui du Ni. Une analyse élémentaire du profil de concentration sur une zone linéaire entre une phase riche en Sn et une phase riche en Si (Fig. 5a et 5b) met en évidence des régions de taille nanométrique enrichies en Sn. Ce résultat est en accord avec la détection d'une phase minoritaire type Sn par DRX (Fig. 3). Par ailleurs, le carbone se trouve très dispersé dans le matériau.

La Figure 5b représente une cartographie chimique selon la ligne de coupe de la Figure 5a. La région du profil comprise entre environ 50 et 150 nm indique une présence importante de Silicium. Celui-ci représente de 20-35 unités arbitraires (u.a.). En deçà de 50 nm et au dessus de 150 nm, la présence de silicium est moins importante car celui-ci représente moins de 22 u.a. Inversement, la région du profil comprise entre environ 50 et 150 nm indique une présence faible de phase contenant de l'étain, c'est-à-dire contenant soit Sn°, soit M-Sn. Celle-ci représente de 15 à 25 u.a. En deçà d'environ 50 nm et au dessus de 150 nm, la présence de la phase contenant de l'étain est plus importante car elle représente au moins 20 u.a. L'enrichissement en étain est particulièrement marqué à la position 25 nm du profil, à laquelle on mesure une quantité de phase contenant de l'étain de 55 u.a. Le profil de la Figure 5b montre donc qu'il existe autour des particules contenant du silicium, une phase enrichie en étain.

La figure 5b permet d'illustrer ce que l'on entend par phase enrichie en étain. Une phase est enrichie en étain si sur au moins un profil de concentration mesuré au microscope électronique à transmission, l'alliage présente un pic de concentration tel que

le ratio $Sn_{max}/ Max(Sn_1, Sn_2)$ est supérieur à 1,1, de préférence supérieur à 1,3 ;

où

$Sn_{max}$ désigne la concentration massique au maximum du pic de concentration de l'étain ;

$Sn_1$ et $Sn_2$ désignent les concentrations massiques d'étain aux deux bases du pic ; et

$Max(Sn_1, Sn_2)$ représente la valeur maximum de $Sn_1$ et de $Sn_2$ ;

le profil de concentration ayant pour origine un point éloigné d'une distance comprise entre 20 et 100 nm du centre des particules contenant du silicium ;

le centre des particules contenant du silicium étant défini comme le point correspondant au centre des zones de concentration les plus élevées en silicium mesurées par imagerie par microscopie électronique à transmission (MET).

Préparation des électrodes

La poudre de matériau actif $Si_{0,32}Sn_{0,18}C_{0,32}Ni_{0,14}Al_{0,04}$ est mélangée avec du noir de carbone et de la carboxyméthylcellulose (CMC) en milieu aqueux. La suspension est homogénéisée puis répartie uniformément sur une feuille de cuivre. Après séchage, l'électrode contient 30% de noir de carbone et 30% de CMC. Les électrodes sont testées en technologie boutons en utilisant du lithium métal comme contre-électrode.

Résultats électrochimiques:

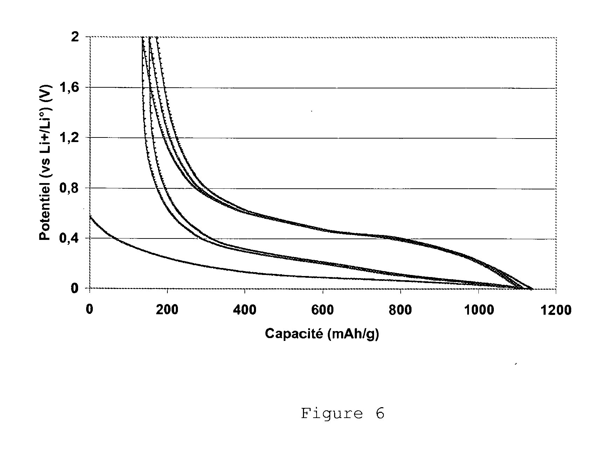

La Figure 6 représente le profil des premiers cycles de charge et de décharge. La capacité réversible initiale est de 950 mAh/g.

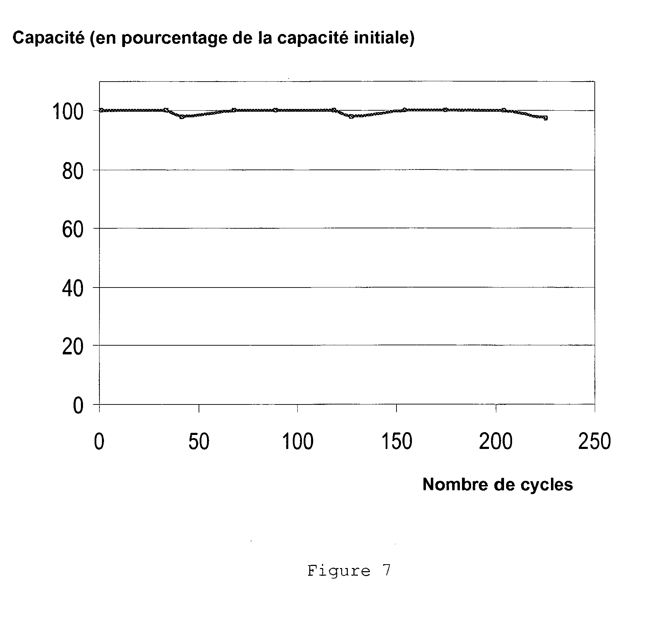

La Figure 7 représente la caractérisation de la stabilité de la capacité en cyclage électrochimique. On constate qu'il n'y a pas de perte significative de la capacité après plus de 200 cycles.

La capacité électrochimique du matériau $Si_{0,32}Sn_{0,18}C_{0,32}Ni_{0,14}Al_{0,04}$ donne donc d'excellents résultats électrochimiques, c'est-à-dire une capacité initiale d'environ 950 mAh/g, stable sur plus de 200 cycles.

L'alliage selon l'invention présente une capacité électrochimique élevée pour une mesure effectuée à une température de 0°C. Il peut être avantageusement utilisé à de très basses températures, par exemple comprises entre -40°C et +10°C.

Les exemples d'alliages suivants 2 et 3 ont été préparés selon le procédé de l'invention.

- Exemple 2 : $Si_{0,37}Sn_{0,14}Al_{0,02}Cu_{0,17}C_{0,30}$ (% atomique) a été synthétisé à partir d'un pré-alliage $Cu_6Sn_5$ par métallurgie des poudres puis réalisation de l'alliage par mécanosynthèse (environ 20h) à partir d'une poudre de silicium de granulométrie inférieure à 1 $\mu$m et de carbone ayant une surface spécifique de 30 m$^2$/g.

- Exemple 3 : $Si_{0,33}Sn_{0,12}Al_{0,03}Fe_{0,12}C_{0,40}$ (% atomique) a été synthétisé à partir d'un pré-alliage $Fe_{50}Sn_{50}$ par métallurgie des poudres puis réalisation de l'alliage par mécanosynthèse (environ 20h) à partir d'une poudre de silicium de granulométrie inférieure à 1 $\mu$m et de carbone ayant une surface spécifique de 30 m$^2$/g.

- Exemple 4 (Comparatif) : $Si_{0,32}Sn_{0,18}C_{0,32}Ni_{0,14}Al_{0,04}$ est synthétisé selon les conditions expérimentales suivantes : Un mélange de poudres de Si, Sn, Ni et Al est broyé pendant 20 heures sans préparation préalable d'un prealliage Sn-Ni. La granulométrie de la poudre de silicium est supérieure à 1 $\mu$m. Le broyage dans le moulin à billes est interrompu et des fibres de carbone sont ajoutées au composite de Si, Sn, Ni et Al. Le broyage dans le moulin à billes reprend et est poursuivi pendant deux heures. L'interruption de la mécanosynthèse pour permettre l'incorporation du matériau carboné correspond au mode opératoire décrit dans JP 2005-158305. Le matériau final présente la forme de billes d'un diamètre supérieur à 1 mm. En raison du diamètre élevé de ces billes, il n'est pas possible de préparer une électrode avec ce matériau.

- Exemple 5 (comparatif) : $Si_{0,32}Sn_{0,18}C_{0,32}Ni_{0,14}Al_{0,04}$ est synthétisé selon les conditions expérimentales suivantes : Un mélange de poudres de Si, Sn, Ni, Al et de graphite est broyé pendant 20 heures sans préparation préalable d'un préalliage de Sn-Ni. La granulométrie des particules de silicium est supérieure à 1 $\mu$m. La granulométrie des particules de graphite est de 15 $\mu$m et leur surface spécifique BET est inférieure à 10 m$^2$/g. De même que dans les conditions expérimentales du document US 2007/0148544, l'alliage est obtenu par une seule étape de mécanosynthèse.

La durée de vie en cyclage d'accumulateurs dont l'électrode négative contient chacun des alliages des exemples 1-5 a été mesurée. Elle est indiquée dans la Table 2 ci-dessous.

Table 2 : Comparaison entre la durée de vie en cyclage des alliages des Exemples 1-3 selon l'invention et la durée de vie en cyclage des alliages des Exemples 4-5 comparatifs.

|  | Nombre de cycles(*) |
|---|---|
| Exemple 1 (invention) | >200 |
| Exemple 2 (invention) | 180 |
| Exemple 3 (invention) | 200 |
| Exemple 4 (comparatif) | 0(**) |
| Exemple 5 (comparatif) | 70 |
| (*) : nombre de cycles effectué par l'accumulateur pour lequel la capacité mesurée de l'accumulateur est supérieure à 80% de sa capacité initiale. (**) : en raison de la taille élevée des particules du matériau final, il est impossible de fabriquer une électrode contenant ce matériau. | |

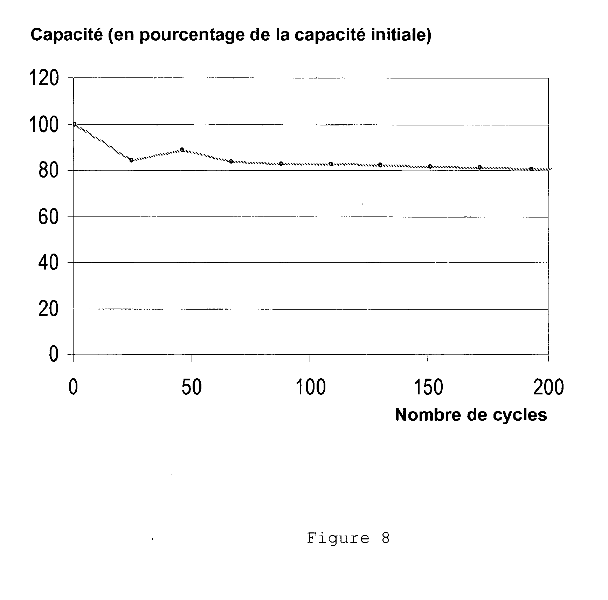

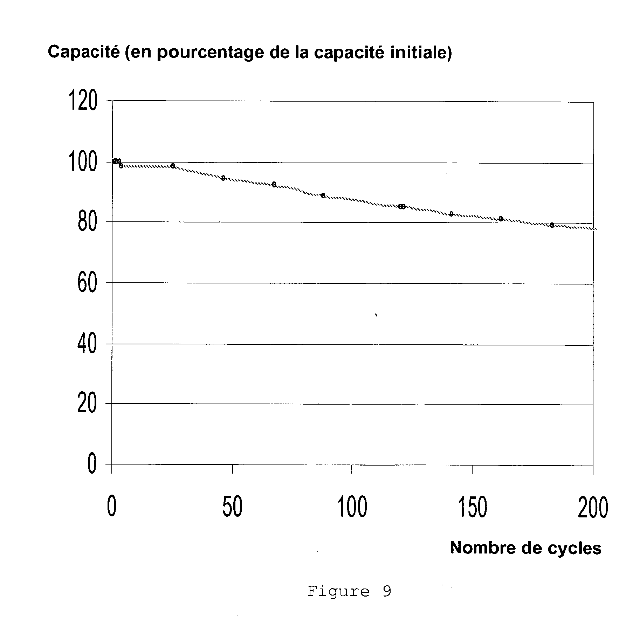

Les accumulateurs dont l'électrode négative contient les alliages selon l'invention présentent une durée de vie en cyclage d'au moins 180 cycles (Figures 7, 8 et 9).

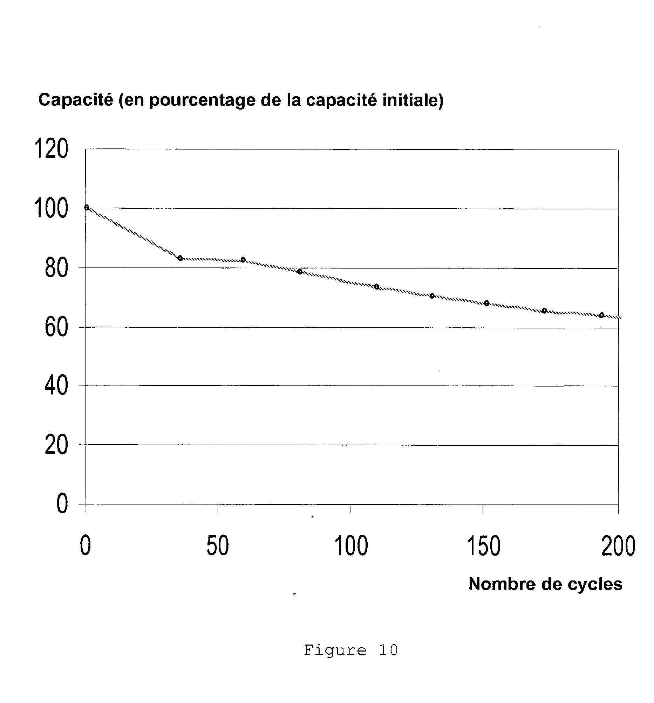

L'alliage de l'exemple 4 qui est comparatif ne peut pas être utilisé pour la préparation d'une électrode en raison de la taille trop élevée des particules. L'alliage de l'exemple 5 présente une durée de vie de seulement 70 cycles (Figure 10). Les exemples 4-5 démontrent donc l'importance de fabriquer un préalliage de type M-Sn pour obtenir une bonne durée de vie en cyclage.

**Revendications**

1. Alliage comprenant étain et silicium, comprenant :

   a) une phase nanocristalline contenant au moins 50% atomique de l'élément silicium Si° ;
   b) une phase nanocristalline contenant un composé à base d'étain ;
   c) une phase nanocristalline constituée de l'élément étain Sn°.

2. Alliage selon la revendication 1, dans lequel la phase nanocristalline a) et/ou des particules contenant du silicium sont recouvertes au moins partiellement par la phase nanocristalline b) et/ou la phase nanocristalline c).

3. Alliage selon la revendication 2, dans lequel la phase nanocristalline a) et/ou au moins une particule contenant du silicium sont recouvertes au moins partiellement par une phase nanocristalline riche en étain, une phase riche en étain étant présente si, sur au moins un profil de concentration mesuré au microscope électronique à transmission, l'alliage présente un pic de concentration tel que
   le ratio $Sn_{max}$/ Max($Sn_1$, $Sn_2$) est supérieur à 1,1, de préférence supérieur à 1,3 ;
   où
   $Sn_{max}$ désigne la concentration massique au maximum du pic de concentration de l'étain ;
   $Sn_1$ et $Sn_2$ désignent les concentrations massiques d'étain aux deux bases du pic ; et
   Max($Sn_1$, $Sn_2$) représente la valeur maximum de $Sn_1$ et de $Sn_2$ ;
   le profil de concentration ayant pour origine un point éloigné d'une distance comprise entre 20 et 100 nm du centre des particules contenant du silicium ;
   le centre des particules contenant du silicium étant défini comme le point correspondant au centre des zones de concentration les plus élevées en silicium mesurées par imagerie par microscopie électronique à transmission (MET).

4. Alliage selon l'une des revendications 2 ou 3, dans lequel la quantité d'étain Sn° dans la phase nanocristalline c) représente jusqu'à 50%, de préférence de 5 à 50%, de préférence de 10 à 40% de la quantité totale d'étain présente dans l'alliage.

5. Alliage selon l'une des revendications 1 à 3, dans lequel la quantité d'étain Sn° dans la phase nanocristalline c) représente moins de 5%, de préférence moins de 3% de la quantité totale d'étain présente dans l'alliage.

6. Alliage selon l'une des revendications précédentes, de formule $Si_aSn_bC_cM_m$ où
   M représente au moins un métal inerte, Al ou un mélange de ceux-ci ;
   $0,20 \le a \le 0,80$ ;
   $0,05 \le b \le 0,40$ ;
   $0,05 \le c \le 0,50$ ;
   $0,01 \le m \le 0,30$ ;
   $a + b > 0,45$ ;
   $a+b+c+m = 1$.

7. Alliage selon l'une des revendications 1 à 6, dans lequel le pourcentage massique de la quantité de phase contenant au moins 95% de silicium dans la phase a) est supérieur à 30%, de préférence supérieur à 40% du pourcentage massique total de silicium contenu dans l'alliage.

8. Alliage selon l'une des revendications 1 à 7 ne comprenant pas de phase SiC.

9. Alliage selon l'une des revendications 1 à 8 ne comprenant pas de carbone cristallin.

10. Alliage selon l'une des revendications 1 à 9, comprenant Al présent en une fraction atomique inférieure à 0,05, de préférence de 0,02 à 0,03 par rapport à l'alliage.

11. Alliage selon l'une des revendications 1 à 10, dans lequel la taille des particules contenant du silicium est de 20 à 200 nm, de préférence de 20 à 100 nm, de préférence de 20 à 50 nm.

**12.** Electrode comprenant un alliage selon l'une des revendications 1 à 11.

**13.** Accumulateur lithium-ion comprenant au moins une électrode négative qui est une électrode selon la revendication 12.

**14.** Procédé de fabrication d'un alliage comprenant du silicium et de l'étain comprenant les étapes de :

a) préparation d'un pré-alliage à partir d'étain et d'au moins un métal inerte, ou d'aluminium ou d'un mélange de ceux-ci ;
b) ajout de carbone, de silicium et éventuellement de métal inerte au préalliage de l'étape a) ;
c) synthèse de l'alliage.

**15.** Procédé selon la revendication 14, dans lequel la surface spécifique du carbone est comprise entre 20 et 500 m$^2$/g, de préférence entre 20 et 100 m$^2$/g.

**16.** Procédé selon l'une des revendications 14 à 15 pour la fabrication d'un alliage selon l'une des revendications 1 à 11.

**Patentansprüche**

**1.** Legierung, die Zinn und Silicium umfasst, umfassend:

a) eine nanokristalline Phase, die wenigstens 50 Atomprozent des Elements Silicium Si enthält;
b) eine nanokristalline Phase, die eine Verbindung auf Zinnbasis enthält;
c) eine nanokristalline Phase, die aus dem Element Zinn Sn aufgebaut ist.

**2.** Legierung nach Anspruch 1, bei der die nanokristalline Phase a) und/oder Silicium enthaltende Teilchen wenigstens teilweise von der nanokristallinen Phase b) und/oder der nanokristallinen Phase c) umhüllt sind.

**3.** Legierung nach Anspruch 2, bei der die nanokristalline Phase a) und/oder wenigstens ein Silicium enthaltendes Teilchen wenigstens teilweise von einer nanokristallinen Phase umhüllt sind, die reich an Zinn ist, wobei eine Phase, die reich an Zinn ist vorliegt, wenn die Legierung auf wenigstens einem Konzentrationsprofil, das mit einem Transmissionselektronenmikroskop gemessen wird, einen Konzentrationshöhepunkt aufweist wie
das Verhältnis $Sn_{max}$/ Max($Sn_1$, $Sn_2$) ist größer als 1,1, vorzugsweise größer als 1,3;
wobei
$Sn_{max}$ die Massenkonzentration im Maximum des Konzentrationshöhepunkts von Zinn bezeichnet;
$Sn_1$ und $Sn_2$ die Massenkonzentrationen an den beiden Basispunkten des Höhepunkts bezeichnen; und
Max($Sn_1$, $Sn_2$) den Maximalwert von $Sn_1$ und $Sn_2$ bezeichnet;
wobei das Konzentrationsprofil als Ursprung einen Punkt aufweist, der um eine Strecke zwischen 20 und 100 nm von der Mitte der Silicium enthaltenden Teilchen verlängert ist;
wobei die Mitte der Silicium enthaltenden Teilchen als der Punkt definiert wird, welcher der Mitte der höchsten Konzentrationszonen von Silicium entspricht, die durch transmissionselektronenmikroskopische Tomographie bestimmt werden (MET).

**4.** Legierung nach einem der Ansprüche 2 oder 3, bei der die Menge an Zinn Sn in der nanokristallinen Phase c) bis zu 50% beträgt, vorzugsweise zwischen 5 und 50%, besonders bevorzugt zwischen 10 und 40% der Gesamtmenge an Zinn, die in der Legierung vorkommt.

**5.** Legierung nach einem der Ansprüche 1 bis 3, bei der die Menge an Zinn Sn in der nanokristallinen Phase c) weniger als 5%, vorzugsweise weniger als 3% der Gesamtmenge an Zinn entspricht, die in der Legierung vorkommt.

**6.** Legierung nach einem der vorhergehenden Ansprüche mit der Formel $Si_a Sn_b C_c M_m$ wobei
M wenigstens ein inertes Metall, Al oder ein Gemisch davon darstellt;
$0,20 \leq a \leq 0,80$;
$0,05 \leq b \leq 0,40$;
$0,05 \leq c \leq 0,50$;
$0,01 \leq m \leq 0,30$;
$a + b > 0,45$;

a+b+c+m = 1.

7. Legierung nach einem der Ansprüche 1 bis 6, der Massenprozentsatz der Menge der Phase, die wenigstens 95% Silicium in der Phase a) enthält, größer als 30%, vorzugsweise größer als 40% des Gesamtmassenprozentsatzes an in der Legierung enthaltenem Silicium ist.

8. Legierung nach einem der Ansprüche 1 bis 7, die keine SiC Phase umfasst.

9. Legierung nach einem der Ansprüche 1 bis 8, die keinen kristallinen Kohlenstoff umfasst.

10. Legierung nach einem der Ansprüche 1 bis 9, die Al umfasst, das in einer atomaren Fraktion vorkommt, die kleiner als 0,05 ist, vorzugsweise kleiner als 0,02 bis 0,03 bezogen auf die Legierung.

11. Legierung nach einem der Ansprüche 1 bis 10, bei der die Größe der Silicium enthaltenden Teilchen 20 bis 200 nm beträgt, vorzugsweise 20 bis 100 nm, besonders bevorzugt 20 bis 50 nm.

12. Elektrode, die eine Legierung nach einem der Ansprüche 1 bis 11 umfasst.

13. Lithiumionenakkumulator, der wenigstens eine negative Elektrode umfasst, die eine Elektrode nach Anspruch 12 ist.

14. Verfahren zur Herstellung einer Legierung, die Silicium und Zinn umfasst, welches die folgenden Schritte umfasst:

   a) Herstellung einer Vorlegierung ausgehend von Zinn und wenigstens einem inerten Metall oder Aluminium oder einem Gemisch dieser;
   b) Zugabe von Kohlenstoff, von Silicium und gegebenenfalls eines inerten Metalls zur Vorlegierung aus Schritt a);
   c) Synthese der Legierung.

15. Verfahren nach Anspruch 14, bei dem die spezifische Oberfläche des Kohlenstoffs zwischen 20 und 500 $m^2/g$ beträgt, vorzugsweise zwischen 20 und 100 $m^2/g$.

16. Verfahren nach einem der Ansprüche 14 und 15 zur Herstellung einer Legierung nach einem der Ansprüche 1 bis 11.


**Claims**

1. An alloy comprising tin and silicon, comprising:

   a) a nanocrystalline phase containing at least 50 at.% of the element silicon Si°;
   b) a nanocrystalline phase containing a compound based on tin;
   c) a nanocrystalline phase constituted by the element tin Sn°.

2. The alloy according to claim 1, in which the nanocrystalline phase a) and/or particles containing silicon are covered at least partially by the nanocrystalline phase b) and/or the nanocrystalline phase c).

3. The alloy according to claim 2, in which the nanocrystalline phase a) and/or at least one particle containing silicon are covered at least partially by a nanocrystalline phase rich in tin, a phase rich in tin being present if, on at least one concentration profile measured with a transmission electron microscope, the alloy has a concentration peak such that
   the ratio $Sn_{max}/Max(Sn_1, Sn_2)$ is greater than 1.1, preferably greater than 1.3;
   where
   $Sn_{max}$ indicates the concentration by mass at the maximum of the concentration peak of tin;
   $Sn_1$ and $Sn_2$ indicate the concentrations by mass of tin at the two bases of the peak; and
   $Max(Sn_1, Sn_2)$ represents the maximum value for $Sn_1$ and $Sn_2$;
   the concentration profile having, as an origin, a point distant from the centre of the particles containing silicon by a distance comprised between 20 and 100 nm;
   the centre of the particles containing silicon being defined as the point corresponding to the centre of the zones of the highest concentration of silicon measured by transmission electron microscopy (TEM) imaging.

4. The alloy according to one of claims 2 or 3, in which the quantity of tin Sn° in the nanocrystalline phase c) represents up to 50%, preferably from 5 to 50%, preferably from 10 to 40%, of the total quantity of tin present in the alloy.

5. The alloy according to one of claims 1 to 3, in which the quantity of tin Sn° in the nanocrystalline phase c) represents less than 5%, preferably less than 3%, of the total quantity of tin present in the alloy.

6. The alloy according to one of the previous claims, with the formula $Si_aSn_bC_cM_m$ where
M represents at least one inert metal, Al or a mixture thereof;
$0.20 \leq a \leq 0.80$;
$0.05 \leq b \leq 0.40$;
$0.05 \leq c \leq 0.50$;
$0.01 \leq m \leq 0.30$;
$a+b > 0.45$;
$a+b+c+m = 1$.

7. The alloy according to one of claims 1 to 6, in which the percentage by mass of the quantity of phase containing at least 95% silicon in phase a) is greater than 30%, preferably greater than 40%, of the total percentage by mass of silicon contained in the alloy.

8. The alloy according to one of claims 1 to 7 not comprising an SiC phase.

9. The alloy according to one of claims 1 to 8 not comprising crystalline carbon.

10. The alloy according to one of claims 1 to 9, comprising Al present in an atomic fraction of less than 0.05, preferably from 0.02 to 0.03, with respect to the alloy.

11. The alloy according to one of claims 1 to 10, in which the size of the particles containing silicon is from 20 to 200 nm, preferably from 20 to 100 nm, preferably from 20 to 50 nm.

12. Electrode comprising an alloy according to one of claims 1 to 11.

13. Lithium-ion accumulator comprising at least one negative electrode which is an electrode according to claim 12.

14. Manufacturing process for an alloy comprising silicon and tin, comprising the stages of:

a) preparing a prealloy from tin and at least one inert metal, or aluminium or a mixture thereof;
b) adding carbon, silicon and optionally inert metal to the prealloy of stage a);
c) synthesizing the alloy.

15. Process according to claim 14, in which the specific surface area of the carbon is comprised between 20 and 500 $m^2/g$, preferably between 20 and 100 $m^2/g$.

16. Process according to one of claims 14 to 15 of manufacturing an alloy according to one of claims 1 to 11.

**Intensité (U.I)**

**Figure 1**

Figure 2

**Intensité (U.A)**

Figure 3

Figure 4

Figure 5a

Figure 5b

Figure 6

**Capacité (en pourcentage de la capacité initiale)**

**Nombre de cycles**

Figure 7

**Capacité (en pourcentage de la capacité initiale)**

**Nombre de cycles**

Figure 8

**Capacité (en pourcentage de la capacité initiale)**

**Nombre de cycles**

Figure 9

**Capacité (en pourcentage de la capacité initiale)**

**Nombre de cycles**

Figure 10

**EP 2 242 129 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2885734 A
- US 20070148544 A
- US 20060115734 A
- JP 2005158305 A